# EUROPÄISCHE PATENTSCHRIFT

(11) **EP 2 756 988 B1**
(45) Veröffentlichungstag und Bekanntmachung des Hinweises auf die Patenterteilung: **27.04.2016**
(21) Anmeldenummer: 13152204.7
(22) Anmeldetag: 22.01.2013
(51) Int. Cl.: B60P 1/48

(54) **Absetzkipper**
Skip loader
Basculeur de dépôt

(43) Veröffentlichungstag der Anmeldung: 23.07.2014
(73) Patentinhaber: F & H Meier Fahrzeugtechnik GbR, 06844 Dessau-Roßlau (DE)
(72) Erfinder: Meier, Frank, 06844 Dessau (DE); Meier, Henning, 06869 Coswig (DE)
(74) Vertreter: Uexküll & Stolberg

(56) Entgegenhaltungen:
- EP-A2- 1 514 727
- DE-B3- 10 307 790
- GB-A- 2 118 519

## Beschreibung

Die vorliegenden Erfindung betrifft einen Absetzkipper mit einer Ladeplattform zum Aufsetzen einer Transporteinheit und mit zwei am Fahrzeugende angelenkten Hubarmen, die jeweils an dem der Anlenkung gegenüberliegenden Lastaufnahmeende Angriffspunkte für erste Aufhängemittel zum Verbinden mit der Transporteinheit haben und die hydraulisch schwenkbar sind, um die Transporteinheit anzuheben, abzusetzen und kippen zu können, wobei jeder Hubarm am Lastaufnahmeende einen Spannarm mit einem hydraulisch ausstellbaren Element aufweist, das dazu ausgestaltet ist, an der Transporteinheit oder an den ersten Aufhängemitteln so anzugreifen, dass bei Ausstellung des ausstellbaren Elements die ersten Aufhängemittel angespannt werden und die Transporteinheit relativ zu dem Spannarm fest gespannt und gegen Bewegungen relativ zu dem Spannarm eingespannt gehalten wird.

Ein derartiger Absetzkipper ist aus DE 103 07 790 B3 bekannt.

Als Transporteinheiten werden hier zusammenfassend Wechselbehälter, Container, Silos etc. bezeichnet. Häufigster Anwendungsfall sind Absetzkipper mit Wechselbehältern. Absetzkipper dieser Art sind zum Beispiel in der DIN-Norm 30723 beschrieben.

Zum Absetzen oder Aufladen der Transporteinheit weisen solche Absetzkipper zwei am Fahrzeugendbereich schwenkbar angebrachte Hubarme auf, die über Hydraulikzylinder verschwenkt werden können. An den äußeren Enden (Lastaufnahmeenden) der Hubarme sind Angriffspunkte für Aufhängemittel, zum Beispiel Kettengehänge, zum Einhängen an Aufhängebolzen auf jeder Seite der Transporteinheit vorgesehen; diese Aufhängemittel werden im Folgenden als erste Aufhängemittel bezeichnet. Regelmäßig sind an den Transporteinheiten auf jeder Seite zwei Aufhängebolzen vorgesehen. Nach Einhängen der ersten Aufhängemittel an die beiden Aufhängebolzen auf jeder Seite der Transporteinheit kann die Transporteinheit durch Schwenken der Hubarme von dem Absetzkipper abgehoben und abgesetzt oder umgekehrt darauf aufgeladen werden.

Zur Ausführung der Kippfunktion muss die Transporteinheit bezüglich des Hubarms und des Spannarms fixiert werden, damit durch Zurückschwenken der Hubearme aus ihrer Ruheposition die Transporteinheit nach hinten geschwenkt und dabei gleichzeitig gekippt wird. An ihren Lastaufnahmeenden sind die Hubarme bei dem aus DE 103 07 790 B3 bekannten Absetzkipper jeweils mit einem starr mit dem Hubarm verbundenen, abgewinkelten Spannarm versehen, der so ausgerichtet ist, dass der Spannarm in der Ruhe- oder Transportstellung der Hubarme vertikal nach unten, auf die Ladeplattform zu verlaufend angeordnet ist. Zum Fixieren der Transporteinheit bezüglich der Hubarme sind die Spannarme jeweils mit einem hydraulisch ausstellbaren Element versehen. Das hydraulisch ausstellbare Element ist so ausgebildet, dass es an der Transporteinheit oder an den ersten Aufhängemitteln so angreift, dass bei Ausstellung des ausstellbaren Elements die ersten Aufhängemittel angespannt werden und die Transporteinheit relativ zu dem Hubarm fest gespannt und gegen Bewegungen relativ zum Hubarm eingespannt gehalten wird. Das Festspannen der Transporteinheit relativ zum Hubarm wird dadurch bewirkt, dass das Ausstellen des wenigstens einen ausstellbaren Elements eine Anspannung und einen Verlauf der ersten Aufhängemittel in einer solchen Weise bewirkt, dass jede Bewegung der Transporteinheit relativ zum Hubarm eine Verlängerung wenigstens in einem Bereich der ersten Aufhängemittel zur Folge hätte, so dass bei Verwendung von im Wesentlichen inelastischen Aufhängemitteln (z.B. Ketten) eine vollständige Fixierung der Transporteinheit erreicht werden kann.

Das hydraulisch ausstellbare Element kann zum Beispiel der Kolben eines Hydraulikzylinders im Spannarm sein, so dass der Spannarm teleskopartig längenverstellbar ist.

Der Spannarm greift zum Beispiel, wie in DE 103 07 790 B3 beschrieben, über zweite Aufhängemittel an der Transporteinheit so an, dass bei Ausstellung des ausstellbaren Elements die ersten und zweiten Aufhängemittel angespannt werden und die Transporteinheit relativ zum Hubarm fest spannen und Gegenbewegungen relativ zum Hubarm eingespannt halten. Bei dieser Ausgestaltung üben die zweiten Aufhängemittel bei Verlängerung des hydraulisch ausstellbaren Elements Kraft auf die Transporteinheit aus, die zur Spannung der ersten und zweiten Aufhängemittel führt, so dass die ersten und zweiten Aufhängemittel die Transporteinheit relativ zu dem Hubarm fest gespannt aufhängen oder fixieren. Das Festspannen wird mit anderen Worten dadurch erreicht, dass die ersten und zweiten Aufhängemittel eine fest gespannte, an wenigstens zwei beabstandeten Punkten auf jeder Seite der Transporteinheit angreifende Aufhängung der Transporteinheit gegen jede Bewegung der Transporteinheit relativ zu den Hubarmen bewirken. Die ersten und zweiten Aufhängemittel sind im Wesentlichen inelastisch, d.h. zeigen bei den im vorliegenden Zusammenhang auftretenden Kräften praktisch keine Längenvergrößerung, so dass keine Relativbewegung zwischen Transporteinheit und Hubarmen stattfinden kann.

Dabei können die ersten Aufhängemittel an den zwei in Abstand auf jeder Seite der Transporteinheit befindlichen Aufhängebolzen angreifen, und die zweiten Aufhängemittel können ebenfalls auf jeder Seite an den beiden Aufhängebolzen angreifen. Durch den seitlichen Abstand der Aufhängebolzen an jeder Seite wird eine stabile Einspannung erzielt, so dass die Transporteinheit relativ zu dem Hubarm festgehalten wird, d.h. sich relativ zu diesem nicht bewegen kann.

Die ersten und zweiten Aufhängemittel müssen aber nicht auf jeder Seite der Transporteinheit jeweils an zwei beabstandeten Angriffspunkten angreifen. Grundsätzlich kann auch das zweite Aufhängemittel nur an einem Angriffspunkt an der Transporteinheit ansetzen, während die ersten Aufhängemittel an ein oder zwei beabstandeten Aufhängebolzen angreifen. Wenn erste und zweite Aufhängemittel jeweils nur an einem Angriffspunkt an der Transporteinheit angreifen, dann würden diese Angriffspunkte auf einer Geraden in Verstellrichtung des Spannarms auf Abstand zueinander liegen. Wichtig für die Einspannfunktion bei dieser Ausgestaltung ist, dass die ersten und zweiten Aufhängemittel insgesamt an wenigstens zwei auf Abstand zueinander liegenden Punkten mit entgegenwirkender Spannung an der Transporteinheit angreifen und diese angespannt halten, so dass jede Drehung oder Bewegung der Transporteinheit relativ zu den Hubarmen eine Verlängerung wenigstens eines der ersten und zweiten Aufhängemittel verursachen würde, so dass entsprechend große rückstellende Drehmomente und/oder rückstellende Kräfte von den ersten und zweiten Aufhängemitteln bewirkt würden. Da in Bezug auf ihre Verlängerung im Wesentlichen inelastische Aufhängemittel verwendet werden, kann sich die Transporteinheit relativ zu den Hubarmen nicht bewegen.

Durch Ausstellen der Spannarme lässt sich so die Transporteinheit relativ zu den Spannarmen und damit zu den mit diesen starr verbundenen Hubarmen festspannen, so dass die Hubarme beim Rückschwenken bei ausgestellten Spannarmen die Transporteinheit kippen. Dadurch wird eine sichere und verlässliche Feststellung der Transporteinheit relativ zu den Hubarmen und damit eine sichere Ausführung des Kippvorgangs gewährleistet.

In einer Ausgestaltung des Standes der Technik gemäß DE 103 07 790 B3 umfasst das wenigstens eine hydraulisch ausstellbare Element zwei symmetrisch und senkrecht zur Längsachse des Spannarms daran montierte Hebel. Die Hebel sind aus einer geöffneten Stellung in eine geschlossene, weiter in Richtung der Verlängerung der Längsachse des Spannarms liegende Stellung schwenkbar und haben an ihren äußeren Ende Mittel zum Angreifen an den ersten Aufhängemitteln. Bei einer auf die Ladeplattform abgestellten Transporteinheit hängen die ersten Aufhängemittel zunächst locker zwischen Hubarm und zwei Aufhängebolzen an der Seite der Transporteinheit. Beim Schwenken der Hebel in einer weiter geschlossenen Stellung, drücken diese von oben auf die ersten Aufhängemittel und spannen diese so an, dass die Transporteinheit relativ zu dem Hubarm festgespannt wird und gegen Bewegungen relativ zum Hubarm eingespannt gehalten wird. Diese Ausgestaltung des Standes der Technik ist auch in Kombination mit einem teleskopartig längenverstellbaren Spannarm möglich. Im Übrigen wird zur weiteren Erläuterung zum Aufbau und zur Funktion der Spannarme an den Hubarmen zum Festspannen der Transporteinheit ausdrücklich auf die Beschreibung in DE 103 07 790 B3 und deren Ausführungsbeispiele verwiesen.

Bei dem beschriebenen Absetzkipper sind die Spannarme starr mit den Hubarmen verbunden. Daher wird der Transportbehälter beim Schwenken der Hubarme nach hinten zunehmend gekippt, wobei der Kippwinkel genau gleich dem Schwenkwinkel der Hubarme aus der Ruhestellung nach hinten ist. Dadurch erfolgt die Entleerung des Transportbehälters, bei vergleichbarem Inhalt, immer am gleichen Punkt hinter dem Fahrzeugende. Das kann jedoch nachteilig sei, denn es kann auch erwünscht sein, dass je nach Umgebungsgegebenheiten eine Entleerung des Wechselbehälters näher am oder weiter entfernt am Fahrzeugende stattfindet. Eine Entleerung in größerer Entfernung vom Fahrzeugende kann zum Beispiel sinnvoll sein, wenn in eine Grube oder Deponie entleert werden soll, an die der Absetzkipper nicht nahe genug heranfahren kann.

Andererseits kann es von dem Ladegut und dessen Eigenschaften (fließend, anhaftend, sperrig usw.) abhängen, bei welchem Kippwinkel das Ladegut im Transportbehälter ins Rutschen gerät. Auch unter diesem Gesichtspunkt wäre eine gezieltere Steuerung des Entladevorgangs wünschenswert.

Es ist Aufgabe der vorliegenden Erfindung, einen Absetzkipper der zuvor beschriebenen Art so zu verbessern, dass der Entladevorgang durch Kippen des Transportbehälters beim Zurückschwenken der Hubarme besser steuerbar ist, insbesondere der Ort der Entleerung in Bezug auf den Standpunkt des Absetzkippers besser steuerbar ist.

Zur Lösung dieser Aufgabe dient der Absetzkipper mit den Merkmalen des Patentanspruchs 1. Vorteilhafte Ausführungsformen der Erfindung sind in den Unteransprüchen angegeben.

Erfindungsgemäß ist vorgesehen, dass jeder Spannarm an dem zugehörigen Hubarm schwenkbar aufgehängt ist und dass an jedem Hubarm ein auf den zugehörigen Einspannarm einwirkender Hydraulikzylinder vorgesehen ist, mit dem die Winkelstellung des Spannarms zum zugehörigen Hubarm einstellbar und in der eingestellten Stellung fixierbar ist. Dadurch ist der Kippwinkel der Transporteinheit nicht mehr ausschließlich an die Schwenkstellung der Hubarme gekoppelt, sondern kann gezielt eingestellt werden. Dadurch kann die Entleerung der Transporteinheit gezielt an dem dafür vorgesehenen Punkt erfolgen. Diese gezielte Entleerung ist besonders vorteilhaft bei Langmaterial oder fließenden Transportgütern in der Transporteinheit und bei der Umleerung in Großbehälter (Hochentleerung).

Durch die erfindungsgemäße Gestaltung wird einerseits eine sichere Einspannung und Fixierung der Transporteinheit relativ zum Spannarm ermöglicht, während gleichzeitig durch die Einstellbarkeit der Winkelstellung der Spannarme zu den Hubarmen eine von der Schwenkbewegung der Hubarme unabhängige Führung der Kippbewegung der Transporteinheit möglich ist.

Der Spannarm ist im Wesentlichen in derselben Ebene schwenkbar, in der der zugehörige Hubarm schwenkt. Vorzugsweise hat jeder Spannarm eine über die schwenkbare Lagerung an dem zugehörigen Hubarm herausreichende, dem austellbaren Element gegenüberliegende Verlängerung. Der zugehörige Hydraulikzylinder ist mit dem Hubarm und der Verlängerung des Spannarms an einem Ort auf Abstand zu der schwenkbaren Lagerung des Spannarms am Hubarm schwenkbar verbunden.

Vorzugsweise sind Anschläge vorgesehen, die die Schwenkbarkeit der Spannarme gegenüber den Hubarmen so begrenzen, dass die Spannarme nicht über eine die beiden Hubarme verbindende Ebene hinausschwenken können und so bei Zurückschwenken der Hubarme aus deren Ruhestellung auf die Ladeplattform gerichtet bleiben.

Vorzugsweise ist das wenigstens eine hydraulisch ausstellbare Element der Kolben eines Hydraulikzylinders im Spannarm, der in Längsrichtung des Spannarms ausstellbar ist, wodurch der Spannarm teleskopartig längenverstellbar ist.

Vorzugsweise sind Mittel vorgesehen sind, um die Spannarme in der Transportstellung der Hubarme, in der diese von ihren hinteren Anlenkungspunkten aus schräg nach vorn auf die Fahrzeugkabine zu verlaufen, in einer auf die Ladeplattform zu gerichteten Stellung zu fixieren, z.B. in einer im Wesentlichen vertikalen Stellung. Dies kann z.B. durch die auf die Spannarme einwirkenden Hydraulikzylinder erfolgen. Gleichzeitig erfolgt eine Vorspannung der ausstellbaren Elemente auf die Ladeplattform zu, um so die ersten Aufhängemittel unter Spannung zu halten und dadurch die Transporteinheit auf der Ladeplattform festzuhalten und so eine Ladungssicherung zu realisieren.

Die Erfindung wird im Folgenden anhand eines Ausführungsbeispiels in den Zeichnungen beschrieben, in denen:
Fig. 1 bis 3 schematische Seitenansichten des Absetzkippers bei einem ersten Kippvorgang zeigen und
Fig. 4 bis 6 schematische Seitenansichten des Absetzkippers bei einem zweiten Kippvorgang zeigen.

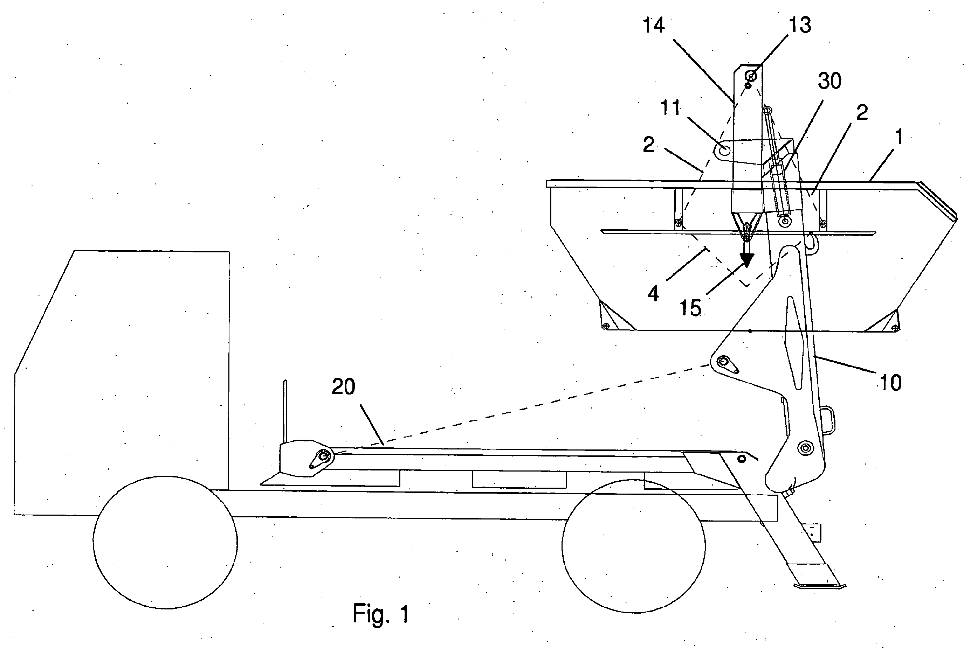

Der in Fig. 1 dargestellte Absetzkipper hat eine Ladeplattform 20, auf der in der Ruhe- oder Transportstellung ein Transportbehälter 1 steht (in Fig. 1 sind die Hubarme 10 bereits teilweise zurückgeschwenkt). Die zwei Hubarme 10 sind am Fahrzeugende schwenkbar angebracht und sind jeweils durch einen nur durch eine gestrichelte Linie angedeuteten Hydraulikzylinder verschwenkbar. An dem der Anlenkung gegenüberliegenden Ende oder Lastaufnahmeende des Hubarms 10 ist ein Angriffspunkt 13 für erste Aufhängemittel 2 vorgesehen. Im Regelfall bestehen die Aufhängemittel 2 aus einer Kette, die mit ihren gegenüberliegenden Enden an zwei Aufhängebolzen an der Transporteinheit 1 angreift.

Ferner ist am Lastaufnahmeende des Hubarms 10 ein Spannarm 14 vorgesehen, der mit einem hydraulisch ausstellbaren Element 15 versehen, hier in Form eines Kolbens eines Hydraulikzylinders, wobei die Kolbenstange nur schematisch als Pfeil dargestellt ist. Wie in der schematischen Darstellung nicht gezeigt ist, greift das hydraulisch ausstellbare Element 15 mit seinem äußeren Ende an zweiten Aufhängemitteln 4 an und drückt die zweiten Aufhängemittel 4 nach unten, wenn das hydraulisch ausstellbare Element 15 nach unten gedrückt wird. Die zweiten Aufhängemittel 4 weisen ebenfalls eine Kette auf, die mit ihren gegenüberliegenden Enden wiederum an den beiden Aufhängebolzen der Transporteinheit 1 eingehängt sind. Indem das hydraulisch ausstellbare Element 15 die zweiten Aufhängemittel 4 in der Mitte nach unten drückt, werden die Ketten 4 und 2 angespannt. Durch diese Anspannung wird die Transporteinheit 1 relativ zum Spannarm 14 eingespannt und fixiert gehalten. Dieser Mechanismus ist mit weiteren Einzelheiten in der schon oben zitierten DE 103 07 790 B3 beschrieben.

Gemäß der vorliegenden Erfindung ist der Spannarm 14 an einer Schwenkachse 11 am Hubarm 10 schwenkbar angelenkt. Der Spannarm 14 weist eine über die Schwenkachse 11 hinausreichende Verlängerung auf, die dem ausstellbaren Element 15 gegenüberliegt. An diese Verlängerung des Spannarms 14 greift ein Hydraulikzylinder 30 an, dessen gegenüberliegendes Ende schwenkbar am Hubarm 10 angebracht ist. Durch Betätigung des Hydraulikzylinders 30 lässt sich die Stellung des Spannarms 14 relativ zum Hubarm 10 gezielt einstellen. Auf diese Weise kann der Kippvorgang in einer gewünschten Weise gesteuert vorgenommen werden.

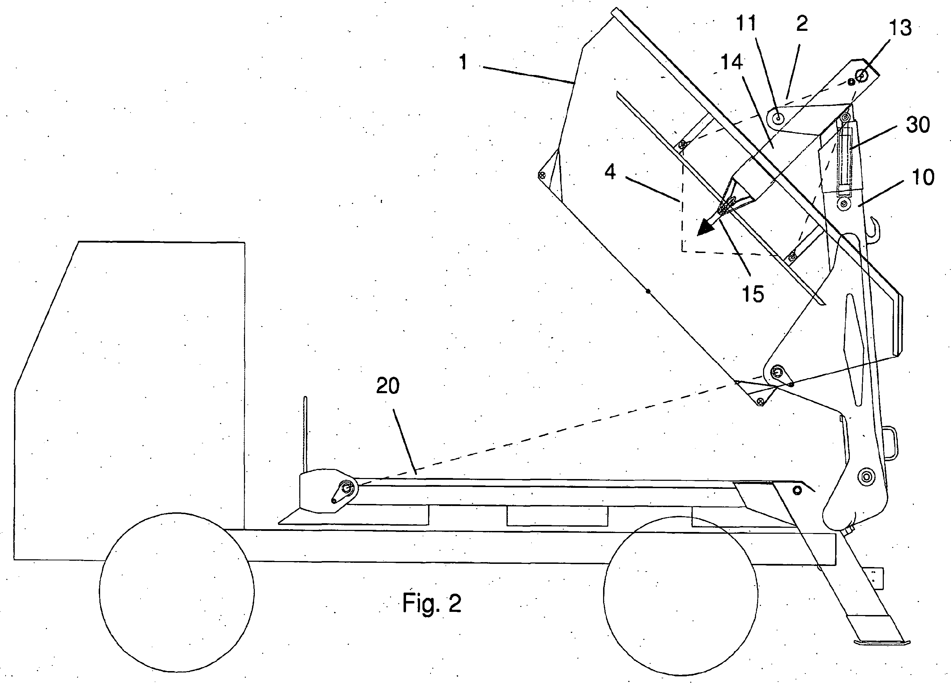

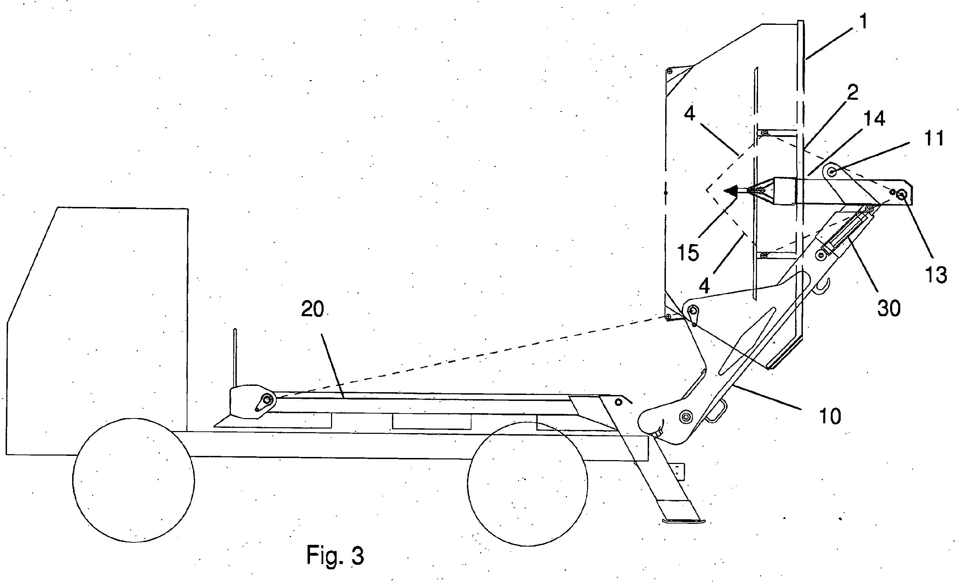

In der Folge der Fig. 1 bis 3 wird der Kippvorgang folgendermaßen durchgeführt. In der in der Fig. 1 vorangehenden, nicht dargestellten Ruhestellung ruht die Transporteinheit 1 auf der Ladeplattform 20, wobei die Spannarme 14 in der Ruhestellung senkrecht zur Ladeplattform 20 stehend, auf diese zu gerichtet ausgerichtet sind. Aus dieser Ruhe- oder Transportstellung wird nun der Kippvorgang eingeleitet, indem zunächst die Hubarme 10 in die in Fig. 1 dargestellte Stellung gebracht werden, in der sie beinahe eine vertikale Ausrichtung erreicht haben. Während dieses Schwenkvorgangs der Hubarme 10 wird auch eine Schwenkung der daran schwenkbar befestigten Spannarme 14 vorgenommen, wobei dies in dem vorliegenden Ausführungsbeispiel so geschieht, dass die Spannarme 14 bis zum Erreichen der in Fig. 1 dargestellten Stellung der Hubarme 10 in der vertikalen Ausrichtung bleiben (um diese zu erreichen müssen die Spannarme 14 an die Hubarme 10 herangeschwenkt werden). Dadurch wird erreicht, dass die Transporteinheit 1 beim Zurückschwenken der Hubarme 10 in die in Fig. 1 dargestellte Stellung eine reine Translationsbewegung durchläuft, ohne gegen die Ebene der Ladeplattform 20 geschwenkt zu werden. Anschließend werden die Spannarme 14 durch Betätigen der Hydraulikzylinder 30 von den Hubarmen 10 wieder weggeschwenkt, um dadurch den Kippvorgang der Transporteinheit 1 einzuleiten, wie in Fig. 2 dargestellt. Anschließend wird diese Stellung der Spannarme 14 zu den Hubarmen 10 fixiert gehalten, und es werden die Hubarme 10 weiter zurückgeschwenkt, um die in Fig. 3 dargestellte Stellung zu erreichen, in der die Transporteinheit 1 im Wesentlichen um 90° gedreht ist.

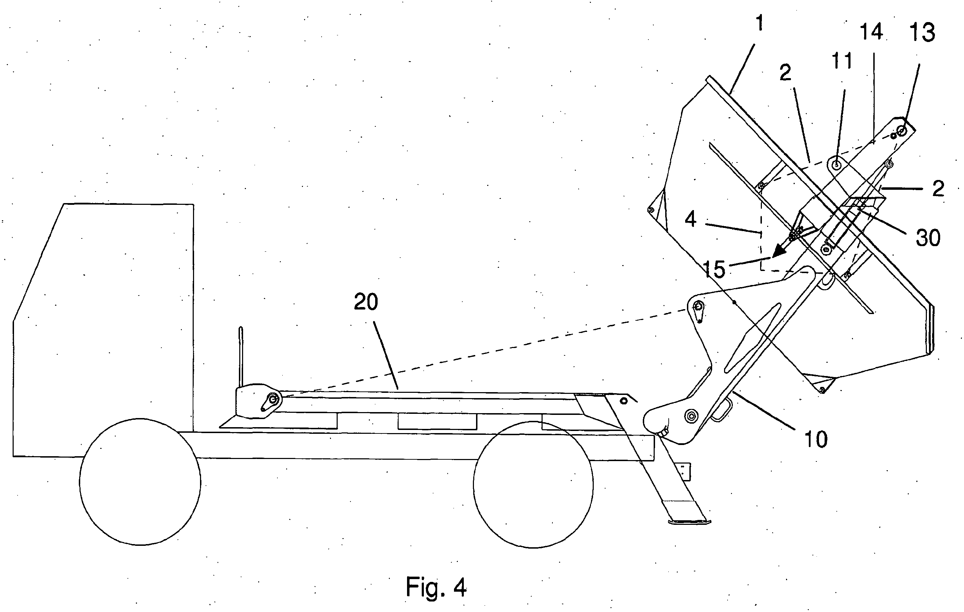

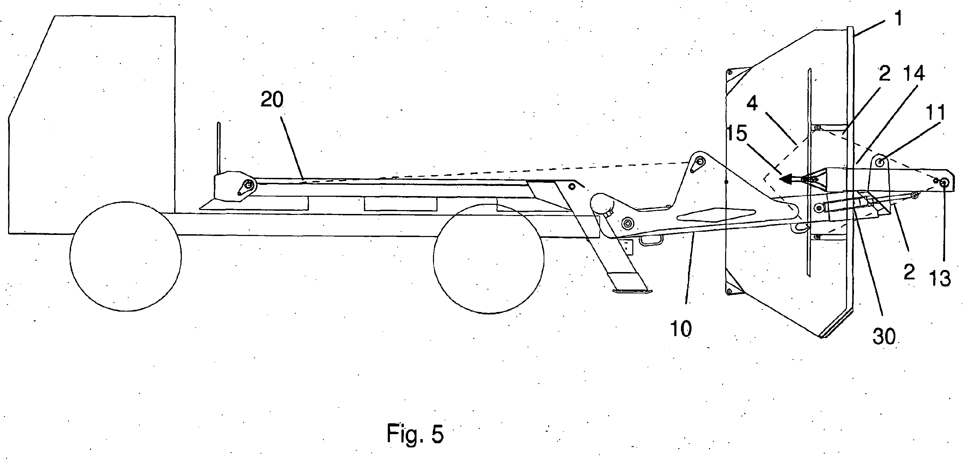

Bei der Ausführung eines anderen Kippvorgangs werden die Hubarme 10 ausgehend von der in Fig. 1 dargestellten Stellung weiter nach hinten geschwenkt um die in Fig. 4 dargestellte Stellung zu erreichen, wobei in diesem Fall keine Betätigung der Hydraulikzylinder 30 erfolgt und daher die Spannarme 14 in der schon in Fig. 1 dargestellten Stellung in Anlage an den Hubarmen 10 verbleiben. Es können zum Beispiel Anschläge vorgesehen sein, die die Schwenkung der Spannarme 14 über die in Fig. 1 dargestellte Stellung noch näher an die Hubarme 10 heran oder darüber hinaus verhindern, so dass die Spannarme mit ihrem ausstellbaren Element 15 immer in Richtung auf die Ladeplattform 20 gerichtet bleiben. Bei dem in Fig. 4 dargestellten Kippvorgang wird dieser schon in Fig. 4 durch das Zurückschwenken der Hubarme 10 eingeleitet. Durch weiteres Zurückschwenken der Hubarme 10 in eine zum Boden nahezu parallele Stellung wird die Transporteinheit 1 aus der in Fig. 4 dargestellten einleitenden Kippstellung in die in Fig. 5 dargestellte vertikale Kippstellung gebracht. Es ist zu erkennen, dass diese vertikale Kippstellung in Fig. 5 weiter vom Fahrzeugende entfernt liegt als die vertikale Kippstellung aus Fig. 3, woraus ersichtlich ist, dass mit der erfindungsgemäßen Ausgestaltung des Absetzkippers eine gezielte Steuerung des Entladeortes angepasst an die Umgebungsbedingungen möglich ist.

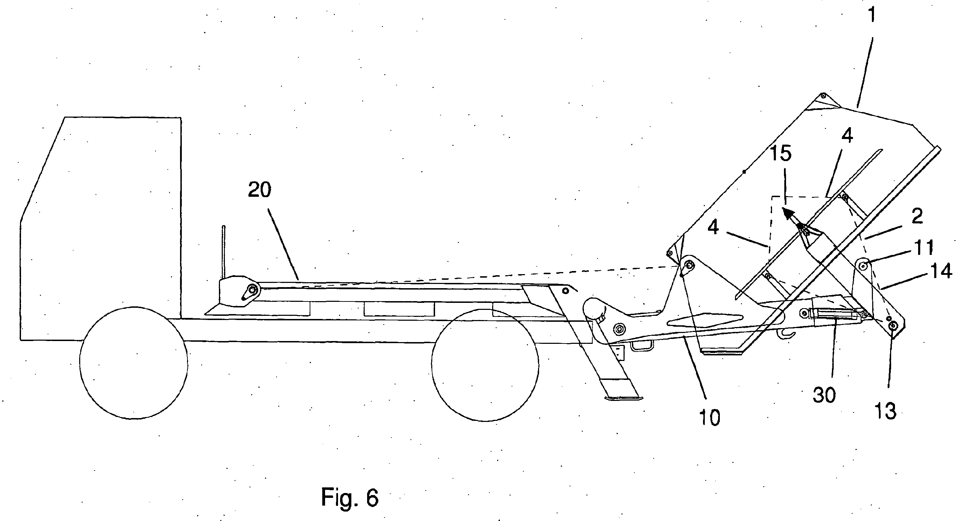

Soweit es erforderlich ist, können nach Erreichen der Stellung aus Fig. 5 eine noch weitere Verschwenkung der Transporteinheit 1 durchgeführt werden, beispielsweise um zähflüssiges oder in der Transporteinheit verhaktes Ladegut zu entleeren. Dazu werden in der in Fig. 5 dargestellten Stellung der Hubarme 10 die Hydraulikzylinder 30 betätigt, um die Einspannarme 14 von ihren Anschlägen an den Hubarmen 10 wegzuschwenken, um die in Fig. 6 gezeigte Stellung zu erreichen, in der der Transportbehälter noch einmal um etwa 45° über die Senkrechte hinaus gedreht ist.

## Patentansprüche

1. Absetzkipper mit einer Ladeplattform zum Aufsetzen einer Transporteinheit und mit zwei am Fahrzeugende angelenkten Hubarmen, die jeweils an dem der Anlenkung gegenüberliegenden Lastaufnahmeende Angriffspunkte für erste Aufhängemittel zum Verbinden mit der Transporteinheit haben und die hydraulisch schwenkbar sind, um die Transporteinheit anzuheben, abzusetzen und kippen zu können, wobei jeder Hubarm (10) am Lastaufnahmeende einen Spannarm (14) mit einem hydraulisch ausstellbaren Element (15) aufweist, das dazu ausgestaltet ist, an der Transporteinheit (1) oder an den ersten Aufhängemitteln (2) so anzugreifen, dass bei Ausstellung des ausstellbaren Elements (15) die ersten Aufhängemittel (2) angespannt werden und die Transporteinheit (1) relativ zu dem Spannarm (14) fest gespannt und gegen Bewegungen relativ zu dem Spannarm (14) eingespannt gehalten wird, **dadurch gekennzeichnet, dass** jeder Spannarm (14) an dem zugehörigen Hubarm (10) schwenkbar aufgehängt ist und dass an jedem Hubarm ein auf den zugehörigen Spannarm einwirkender Hydraulikzylinder (30) vorgesehen ist, mit dem die Winkelstellung des Spannarmes (14) zum zugehörigen Hubarm (10) einstellbar und in der eingestellten Stellung fixierbar ist.

2. Absetzkipper nach Anspruch 1, **dadurch gekennzeichnet, dass** jeder Spannarm (14) eine über die schwenkbare Lagerung an dem Hubarm (10) hinausreichende, dem ausstellbaren Element (15) gegenüberliegende Verlängerung hat und dass der zugehörige Hydraulikzylinder (30) mit dem Hubarm (10) und der Verlängerung des Spannarms an einem Ort auf Abstand zu der schwenkbaren Lagerung des Spannarms (14) am Hubarm (10) verbunden ist.

3. Absetzkipper nach einem der vorhergehenden Ansprüche, **dadurch gekennzeichnet, dass** Anschläge vorgesehen sind, die die Schwenkbarkeit der Spannarme (14) gegenüber den Hubarmen (10) so beschränken, dass die Spannarme (14) nicht über eine die beiden Hubarme verbindende Ebene hinaus schwenken können und so beim Zurückschwenken der Hubarme (10) aus deren Ruhestellung auf die Ladeplattform (20) gerichtet bleiben.

4. Absetzkipper nach einem der vorhergehenden Ansprüche, **dadurch gekennzeichnet, dass** das hydraulische ausstellbare Element (15) einen Kolben eines Hydraulikzylinders im Spannarm (14) aufweist, der in Längsrichtung des Spannarms ausstellbar ist, wodurch der Spannarm (14) teleskopartig längenverstellbar ist.

5. Absetzkipper nach einem der vorhergehenden Ansprüche, **dadurch gekennzeichnet, dass** Mittel vorgesehen sind, um die Spannarme (14) in der Transportstellung der Hubarme (10) in einer auf die Ladeplattform zu gerichteten Stellung zu fixieren und die ausstellbaren Elemente (15) unter Vorspannung auf die Ladeplattform zu halten, um so die ersten Aufhängemittel (2) unter Spannung zu halten und dadurch die Transporteinheit (1) als Ladungssicherung auf der Ladeplattform zu sichern.

## Claims

1. Skip truck comprising a loading platform for placing a transportation unit and two lift arms pivoted at the vehicle end, each of which lift arms includes at its load bearing end opposite to its pivotal mounting a point of application for first suspension means for connecting to the transportation unit and each of which is hydraulically pivotable to be able to lift, set down and tilt the transportation unit, wherein each lift arm (10) comprises a tension arm (14) at its load bearing end, which tension arm comprises a hydraulically extendable element (15) which is adapted to act on the transportation unit (1) or on the first suspension means (2) in such a manner that, when the extendable element (15) is extended, the first suspension means (2) are tensioned and the transportation unit (1) is fixedly clamped relative to the tension arm (14) and is held clamped against motions relative to the tension arm (14), **characterized in that** each tension arm (14) is pivotable mounted at the associated tension arm (10) and that at each lift arm a hydraulic cylinder (30) is provided for acting on the associated tension arm, by which hydraulic cylinder the angular positioning of the tension arm (14) with respect to the associated lift arm (10) can be set and fixed in the adjusted positioning.

2. Skip truck according to claim 1, **characterized in that** each tension arm (14) comprises a projection which extends beyond the pivotal mounting at the lift arm (10) and which is opposite to the extendable element (15), and that the associated hydraulic cylinder (30) is connected to the lift arm (10) and to the projection of the tension arm at a location spaced apart from the pivotal mounting of the tension arm (14) on the lift arm (10).

3. Skip truck according to any of the preceding claims, **characterized in that** stops are provided which limit pivotal movement of the tension arms (14) with respect to the lift arms (10) such that the tension arms (14) cannot pivot beyond a plane connecting the two lift arms and in this manner remain directed to the load platform (20) when the lift arms (10) are pivoted back from their rest position.

4. Skip truck according to any of the preceding claims, **characterized in that** the hydraulically extendable element (15) comprises a piston of a hydraulic cylinder in the tension arm (14), which is extendable in longitudinal direction of the tension arm, whereby the tension arm (14) is length adjustable in a telescopic manner.

5. Skip truck according to any of the preceding claims, **characterized in that** means are provided to fix the tension arms (14) in the transport position of the lift arms (10) in a positioning directed towards the loading platform and to maintain a bias force on the extendable elements (15) to thereby keep the first suspension means (2) under tension and to thereby secure the transportation unit (1) as a load restrain.

## Revendications

1. Multibenne avec une plateforme de chargement pour poser dessus une unité de transport et avec deux bras de levage articulés à l'extrémité du véhicule qui ont chacun, à l'extrémité de réception de charge opposée à l'articulation, des points d'attaque pour des premiers moyens de suspension pour relier à l'unité de transport et qui sont pivotants de manière hydraulique pour pouvoir soulever l'unité de transport, la déposer et la basculer, cependant que chaque bras de levage (10) présente, à l'extrémité de réception de charge, un bras de serrage (14) avec un élément qui peut être déployé de manière hydraulique (15) qui est configuré pour se mettre en prise sur l'unité de transport (1) ou sur les premiers moyens de suspension (2) de telle manière que, lors du déploiement de l'élément qui peut être déployé (15), les premiers moyens de suspension (2) sont tendus et l'unité de transport (1) est solidement tendue par rapport au bras de serrage (14) et est maintenue serrée contre des mouvements par rapport au bras de serrage (14), **caractérisée en ce que** chaque bras de serrage (14) est suspendu de manière pivotante sur le bras de levage correspondant (10) et qu'un vérin hydraulique (30) qui agit sur le bras de serrage correspondant est prévu sur chaque bras de levage, vérin avec lequel la position angulaire du bras de serrage (4) par rapport au bras de levage correspondant (10) peut être réglée et peut être fixée dans la position réglée.

2. Multibenne selon la revendication 1, **caractérisée en ce que** chaque bras de serrage (14) a une extension opposée à l'élément qui peut être déployé, qui va au-delà du palier pivotant sur le bras de levage (10) et que le vérin hydraulique correspondant (30) est relié au bras de levage (10) et à l'extension du bras de serrage à un endroit à distance du palier pivotant du bras de serrage (14) sur le bras de levage.

3. Multibenne selon l'une des revendications précédentes, **caractérisée en ce que** des butées sont prévues qui limitent la possibilité de pivotement des bras de serrage (14) par rapport aux bras de levage (10) de telle manière que les bras de serrage (14) ne peuvent pas pivoter au-delà d'un plan qui relie les deux bras de levage et qu'ils restent ainsi orientés sur la plateforme de chargement lors du repivotement des bras de levage (10) à partir de leur position de repos.

4. Multibenne selon l'une des revendications précédentes, **caractérisée en ce que** l'élément hydraulique qui peut être déployé (15) présente un piston d'un vérin hydraulique dans le bras de serrage (14) qui peut être déployé dans la sens longitudinal du bras de serrage si bien que le bras de serrage (14) est réglable en longueur de manière télescopique.

5. Multibenne selon l'une des revendications précédentes, **caractérisée en ce que** des moyens sont prévus pour fixer les bras de serrage (14) dans la position de transport des bras de levage (10) dans une position orientée sur la plateforme de chargement et pour maintenir les éléments qui peuvent être déployés (15) précontraints sur la plateforme de chargement pour ainsi maintenir les premiers moyens de suspension (2) sous tension et pour ainsi bloquer l'unité de transport (1) comme fixation du chargement sur la plateforme de chargement.
